# EUROPÄISCHE PATENTSCHRIFT

(11) **EP 1 113 603 B1**
(45) Veröffentlichungstag und Bekanntmachung des Hinweises auf die Patenterteilung: **21.03.2007**
(21) Anmeldenummer: 00127325.9
(22) Anmeldetag: 13.12.2000
(51) Int. Cl.: H04H 1/00

(54) **Satellitenrundfunksignalempfänger zum Empfang digital codierter Satellitenrundfunksignale**
Satellite broadcast receiver for receiving digitally coded satellite broadcast signals
Récepteur pour la réception d'émissions codées numériques diffusées par satellite

(30) Priorität: 16.12.1999 DE 29922148 U
(43) Veröffentlichungstag der Anmeldung: 04.07.2001
(73) Patentinhaber: Grundig Multimedia B.V., 1083HJ Amsterdam (NL)
(72) Erfinder: Bierschneider, Michael, 92318 Neumarkt (DE)
(74) Vertreter: Pröll, Jürgen

(56) Entgegenhaltungen:
- US-A- 5 225 902
- US-A- 5 923 642

## Beschreibung

Die Erfindung betrifft einen Satellitenrundfunksignalempfänger zum Empfang digital codierter Satellitenrundfunksignale.

Ein derartiger Satellitenrundfunksignalempfänger ist beispielsweise in Form einer Gemeinschaftsempfangsanlage bekannt. Eine Gemeinschaftsempfangsanlage weist eine Mehrzahl von parallel zueinander angeordneten Empfangszügen auf,die oftmals auch als Kassetten bezeichnet werden. Den Kassetten wird eingangsseitig das von der Außeneinheit einer Satellitenempfangsanlage abgeleitete Signal zugeführt. Jeder Kassette kann durch einen Programmiervorgang ein gewünschter Ausgangskanal zugeordnet werden. Man unterscheidet analoge Kassetten, die zum Empfang und zur Verarbeitung analoger Satellitenfemsehsignale dienen, und digitale Kassetten, die zum Empfang und zur Verarbeitung digital codierter Satellitenfemsehsignale dienen.

Vor der Inbetriebnahme einer derartigen Gemeinschaftsempfangsanlage müssen am Aufstellungsort die Ausgangspegel der einzelnen Kassetten auf einen geeigneten Wert eingestellt werden, damit sichergestellt ist, daß nachgeschaltete Verstärkerstufen nicht übersteuert werden.

Zu diesem Zwecke werden heute beim Vorliegen analoger Kassetten herkömmliche Analog-Meßgeräte verwendet, die an den Ausgang der Gemeinschaftsempfangsanlage angeschlossen werden und den Pegel des Ausgangssignals bei der Bildträgerfrequenz meßtechnisch erfassen sowie anzeigen. Dieser Ausgangspegel kann dann auf einen vorgegebenen Wert eingestellt werden.

Zu einer Einstellung des Ausgangspegels digitaler Kassetten werden heute spezielle QAM-Meßempfänger verwendet, die vergleichsweise teuer sind. In diesen QAM-Meßempfängern wird dem Umstand Rechnung getragen, daß bei QAM-Signalen eine Mehrzahl von Amplituden- und Phasenzuständen existiert. Es erfolgt eine Erfassung der Pegelverhältnisse bei allen verschiedenen Zuständen und daraus abgeleitet die Bereitstellung eines Meßsignals, welches in geeigneter Form angezeigt wird und zur Einstellung des Ausgangspegels der digitalen Kassette verwendet werden kann.

US-A-5923642 zeigt einen Satellitenrundfunkempfänger mit einen QAM-Modulator und einen Ausgangsumsetzer zur Frequenzumsetzung des QAM-Signals in einen höheren Frequenzbereich.

Ausgehend von diesem Stand der Technik liegt der Erfindung die Aufgabe zugrunde einen Weg aufzuzeigen, wie die Einstellung des Ausgangspegels eines digital codierte Satellitenrundfunksignale empfangenden Satellitenrundfunksignalempfängers verbessert werden kann.

Diese Aufgabe wird durch einen Satellitenrundfunksignalempfänger mit den im Anspruch 1 angegebenen Merkmalen gelöst. Vorteilhafte Ausgestaltungen und Weiterbildungen der Erfindung ergeben sich aus den abhängigen Ansprüchen 2-9. Der Anspruch 10 betrifft eine Vorrichtung zur Messung des Pegels eines empfangenen digital codierten Satellitenrundfunksignals.

Die Vorteile der Erfindung bestehen insbesondere darin, daß zur Messung des Pegels empfangener digital codierter Satellitenrundfunksignale herkömmliche analoge Standard-Meßempfänger verwendet werden können, so daß auf teure QAM-Meßempfänger verzichtet werden kann.

Die Erfindung ist in vorteilhafter Weise nicht nur bei Gemeinschaftsempfangsanlagen, sondern auch bei allen anderen Satellitenempfängem einsetzbar, die zum Empfang von digital codierten Satellitenrundfunksignalen vorgesehen sind.

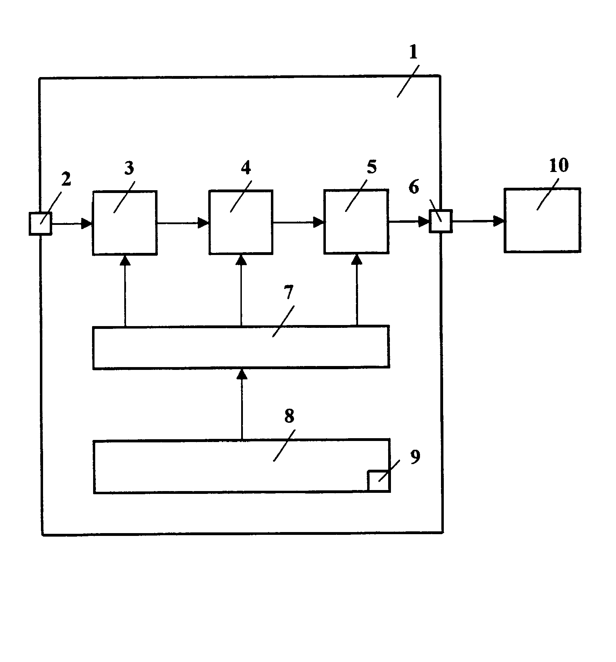

Weitere vorteilhafte Eigenschaften der Erfindung ergeben sich aus deren beispielhafter Erläuterung anhand der Figur.

Diese zeigt die zum Verständnis der Erfindung notwendigen Baugruppen einer Satelliten-Gemeinschaftsempfangsanlage in Form eines Blockschaltbildes.

Der gezeigte Satellitenrundfunksignalempfänger 1 weist einen Eingangsanschluß 2 auf, welchem von der Außeneinheit der Satellitenempfangsanlage abgeleitete Satellitenrundfunksignale zuführbar sind. Diese liegen in einem Frequenzbereich zwischen 950 MHz und 2150 MHz und sind in einer Vielzahl von Kanälen angeordnet.Die empfangenen Signale enthalten sowohl analoge Satellitenrundfunksignale als auch digital codierte Satellitenrundfunksignale, die mittels analoger bzw. digitaler, im Satellitenrundfunksignalempfänger angeordneter Kassetten in einen jeweils gewünschten Ausgangsfrequenzbereich umgesetzt werden. Bei den digital codierten Satellitenrundfunksignalen handelt es sich um QPSK-Signale.

Eine digitale Kassette weist eine Frontend-Schaltung 3, einen QAM-Modulator 4 und einen Ausgangsumsetzer 5 auf.

Der Frontend-Schaltung 3 werden die vom Eingangsanschluß 2 abgeleiteten digital codierten Rundfunksignale zugeführt. Die Frontend-Schaltung weist unter anderem einen Viterbi-Decoder und einen Reed-Solomon-Decoder auf und stellt ausgangsseitigeinen Elementardatenstrom bzw. MPEG-Datenstrom zur Verfügung, welcher die in einem ausgewählten Satellitenkanal übertragenen Daten enthält. Diese Daten entsprechen beispielsweise 8 digitalen Fernsehprogrammen.

Der genannte Elementardatenstrom wird einem QAM-Modulator 4 zugeführt, mittels dessem aus den genannten Daten ein QAM-64-Signal in einer Zwischenfrequenzlage generiert wird. Dieses liegt beispielsweise in einem Frequenzbereich zwischen 32 MHz und 40 MHz und weist eine Bandbreite von üblicherweise 8 MHz auf.

Die Ausgangssignale des QAM-Modulators 4 werden einem Ausgangsumsetzer 5 zugeführt, der die ihm zugeführten Signale in einen gewünschten höheren Frequenzbereich umsetzt, beispielsweise in einen Frequenzbereich zwischen 302 MHz und 310 MHz.

Zur Steuerung der Frontend-Schaltung 3, des QAM-Modulators 4 und des Ausgangsumsetzers 5 ist eine Steuereinheit 7 vorgesehen, die vorzugsweise in Form eines Mikrocomputers realisiert ist.

Die Steuereinheit 7 ist mit einer Bedieneinheit 8 verbunden, mittels derer unter anderem eine Auswahl gewünschter Eingangs- und Ausgangskanäle vorgenommen werden kann.

Weiterhin weist die Bedieneinheit 8 eine Taste 9 auf, durch deren Betätigung der QAM-Modulator 4 durch die Steuereinheit 7 in eine Sonderbetriebsart gebracht wird. In dieser Sonderbetriebsart generiert der QAM-Modulator ein Trägersignal mit einer definierten Frequenz, die der Bildträgerfrequenz eines im vorliegenden ZF-Kanal übertragbaren analogen Satellitenfemsehsignals entspricht, und einer Amplitude, die dem höchsten Amplitudenwert entspricht, der im QAM-Signal enthalten ist.

Dieses Signal wird im Ausgangsumsetzer 5 in einen höheren Frequenzbereich umgesetzt, beispielsweise in den Frequenzbereich zwischen 302 MHz und 310 MHz, und am Ausgangsanschluß 6 des Satellitenrundfunksignalempfängers 1 zur Verfügung gestellt. Dadurch erscheint auch beim Vorliegen eines eingangsseitigen digital codierten Satellitenrundfunksignals am Ausgang des Satellitenrundfunksignalempfängers an derselben Stelle ein Bildträgersignal, an der auch beim Vorliegen eines eingangsseitigen analog codierten Satellitenrundfunksignals ein Bidträgersignal vorliegen würde.

Vom Ausgang des Satellitenrundfunksignalempfängers aus kann das genannte, in der Sonderbetriebsart des Empfängers erzeugte Bildträgersignal einem externen, an den Ausgang 6 des Satellitenrundfunksignalempfängers 1 angeschlossenen Meßempfänger 10 zugeführt werden. Dieser Meßempfänger ist ein handelsüblicher analoger Meßsignalempfänger, mittels dessen eine Visualisierung bzw. Anzeige des Ausgangspegels des Satellitenrundfunksignalempfängers erfolgen kann. Unter Verwendung des angezeigten Ausgangspegels kann dann in herkömmlicher Weise eine Einstellung des Ausgangspegels der digitalen Kassette des Satellitenrundfunksignalempfängers erfolgen, so daß ein teurer, externer QAM-Meßempfänger nicht notwendig ist.

## Patentansprüche

1. Satellitenrundfunksignalempfänger zum Empfang digital codierter Satellitenrundfunksignale, welcher
einen QAM-Modulator zur Umsetzung eines aus einem empfangenen Satellitenrundfunksignal abgeleiteten, mehrere Rundfunkprogramme enthaltenden Elementardatenstromes in ein in einem ZF-Kanal gelegenes QAM-Signal und
einen Ausgangsumsetzer zur Frequenzumsetzung des QAM-Signals in einen höheren Frequenzbereich aufweist,
**dadurch gekennzeichnet, daß**
der QAM-Modulator (4) in einer Sonderbetriebsart betreibbar ist, in welcher er an seinem Ausgang ein abgeleitetes Trägersignal mit einer definierten Frequenz zur Verfügung stellt, die der Bildträgerfrequenz eines in demselben ZF-Kanal übertragbaren analogen Satellitenfernsehsignals entspricht.

2. Satellitenrundfunksignalempfänger nach Anspruch 1,
**dadurch gekennzeichnet, daß**
er eine Satellitengemeinschaftsempfangsanlage ist.

3. Satellitenrundfunksignalempfänger nach Anspruch 1 oder 2,
**dadurch gekennzeichnet, daß**
er einen Eingangsanschluß (2) für ein von der Außeneinheit einer Satellitenempfangsanlage abgeleitetes Eingangssignal und eine mit dem Eingangsanschluß verbundene Frontend-Schaltung (3) aufweist, daß der Ausgang der Frontend-Schaltung (3) mit dem Eingang des QAM-Modulators (4) verbunden ist, und daß der Ausgangsumsetzer (5) ausgangsseitig mit einem Ausgangsanschluß (6) des Satellitenrundfunksignalempfängers (1) verbunden ist.

4. Satellitenrundfunksignalempfänger nach einem der vorhergehenden Ansprüche,
**dadurch gekennzeichnet, daß**
er ein Bedienelement (9) zur Aktivierung der Sonderbetriebsart aufweist.

5. Satellitenrundfunksignalempfänger nach einem der vorhergehenden Ansprüche,
**dadurch gekennzeichnet, daß**
der Eingangsanschluß (2) zum Empfang von Signalen vorgesehen ist, die im Frequenzbereich von 950-2150 MHz liegen.

6. Satellitenrundfunksignalempfänger nach einem der vorhergehenden Ansprüche,
**dadurch gekennzeichnet, daß**
die Frontend-Schaltung (1) einen Viterbi-Decoder und einen Reed-Solomon-Decoder aufweist.

7. Satellitenrundfunksignalempfänger nach einem der vorhergehenden Ansprüche,
**dadurch gekennzeichnet, daß**
die Frontend-Schaltung (1) ausgangsseitig einen Elementardatenstrom zur Verfügung stellt, in welchem Daten enthalten sind, die 8 digitalen Fernsehprogrammen entsprechen.

8. Satellitenrundfunksignalempfänger nach einem der vorhergehenden Ansprüche,
**dadurch gekennzeichnet, daß**
der ZF-Kanal eine Bandbreite bis zu 8 MHz aufweist.

9. Satellitenrundfunksignalempfänger nach einem der vorhergehenden Ansprüche,
**dadurch gekennzeichnet, daß**
der ZF-Kanal im Frequenzbereich zwischen 32 und 40 MHz liegt und/oder das empfangene Satellitenrundfunksignal QPSK-Signale aufweist.

10. Vorrichtung zur Messung des Pegels eines empfangenen digital codierten Satellitenrundfunksignals, aufweisend einen Satellitenrundfunksignalempfänger nach einem der Ansprüche 1-10 und einen an den Ausgang des Satellitenrundfunksignalempfängers (1) angeschlossenen Standard-Antennenmeßempfänger (10).

## Claims

1. Satellite broadcast signal receiver for the reception of digitally encoded satellite broadcast signals, which satellite broadcast signal receiver comprises
a QAM modulator for converting an elementary data stream derived from a received satellite broadcast signal and containing a plurality of broadcast programmes into a QAM signal situated in an IF channel and
an output converter for converting the frequency of the QAM signal to a higher frequency range, **characterized in that** the QAM modulator (4) can be operated in a special operating mode in which it provides at its output a derived carrier signal having a defined frequency that corresponds to the video carrier frequency of an analog satellite television signal that can be transmitted in the same IF channel.

2. Satellite broadcast signal receiver according to Claim 1, **characterized in that** it is a satellite community reception system.

3. Satellite broadcast signal receiver according to Claim 1 or 2, **characterized in that** it has an input terminal (2) for an input signal derived from the outdoor unit of a satellite reception system and a front-end circuit (3) connected to the input terminal, **in that** the output of the front-end circuit (3) is connected to the input of the QAM modulator (4) and **in that** the output of the output converter (5) is connected to an output terminal (6) of the satellite broadcast signal receiver (1)

4. Satellite broadcast signal receiver according to any one of the preceding claims, **characterized in that** it comprises an operating element (9) for activating the special operating mode.

5. Satellite broadcast signal receiver according to any one of the preceding claims, **characterized in that** the input terminal (2) is provided for the reception of signals that are in the 950-2150 MHz frequency range.

6. Satellite broadcast signal receiver according to any one of the preceding claims, **characterized in that** the front-end circuit (3) comprises a Viterbi decoder and a Reed-Solomon decoder.

7. Satellite broadcast signal receiver according to any one of the preceding claims, **characterized in that** the front-end circuit (1) provides at its output an elementary data stream that contains data corresponding to 8 digital television programmes.

8. Satellite broadcast signal receiver according to any one of the preceding claims, **characterized in that** the IF channel has a bandwidth of up to 8 MHz.

9. Satellite broadcast signal receiver according to any one of the preceding claims, **characterized in that** the IF channel is in the frequency range between 32 and 40 MHz and/or the received satellite broadcast signal comprises QPSK signals.

10. Device for measuring the level of a received digitally encoded satellite broadcast signal, comprising a satellite broadcast signal receiver according to any one of Claims 1-10 and a standard antenna measuring receiver (1) connected to the output of the satellite broadcast signal receiver (10).

## Revendications

1. Récepteur de signaux radio par satellite pour recevoir des signaux radio par satellite codés numériques, qui
présente un modulateur QAM pour convertir un flux de données élémentaires contenant plusieurs programmes radio provenant d'un signal radio par satellite reçu en un signal QAM disposé dans un canal ZF et
un convertisseur de sortie pour convertir en fréquence le signal QAM dans un domaine de fréquence plus élevé,
**caractérisé en ce que**
le modulateur QAM (4) peut être actionné dans un mode de fonctionnement particulier, dans lequel il dispose à sa sortie d'un signal de porteuse délivré avec une fréquence définie, qui correspond à la fréquence de porteuse d'un signal de télévision par satellite analogique transmis dans le même canal ZF.

2. Récepteur de signaux radio par satellite selon la revendication 1, **caractérisé en ce qu'**il est une installation de réception collective satellite.

3. Récepteur de signaux radio par satellite selon la revendication 1 ou 2, **caractérisé en ce**
**qu'**il présente un raccord d'entrée (2) pour un signal d'entrée provenant de l'unité extérieure d'une installation de réception par satellite et un circuit frontal (3) relié au raccord d'entrée, en ce que la sortie du circuit frontal (3) est reliée à l'entrée du modulateur QAM (4), et en ce que le convertisseur de sortie (5) est relié côté sortie à un raccord de sortie (6) du récepteur de signaux radio par satellite (1).

4. Récepteur de signaux radio par satellite selon l'une des revendications précédentes,
**caractérisé en ce qu'**il présente un élément de commande (9) pour activer le mode de fonctionnement particulier.

5. Récepteur de signaux radio par satellite selon l'une des revendications précédentes, **caractérisé en ce que**
le raccord d'entrée (2) est prévu pour recevoir des signaux, qui se trouvent dans le domaine de fréquence compris entre 952 et 2150 MHz.

6. Récepteur de signaux radio par satellite selon l'une des revendications précédentes, **caractérisé en ce que**
le circuit frontal (1) présente un décodeur Viterbi et un décodeur Reed-Solomon.

7. Récepteur de signaux radio par satellite selon l'une des revendications précédentes, **caractérisé en ce que**
le circuit frontal (1) dispose côté sortie d'un flux de données élémentaires, dans lequel des données sont contenues, qui correspondent à 8 programmes numériques de télévision.

8. Récepteur de signaux radio par satellite selon l'une des revendications précédentes, **caractérisé en ce que**
le canal ZF présente une bande passante allant jusqu'à 8 MHz.

9. Récepteur de signaux radio par satellite selon l'une des revendications précédentes, **caractérisé en ce que**
le canal ZF se trouve dans le domaine de fréquence compris entre 32 et 40 MHz et/ou le signal radio par satellite reçu présente des signaux QPSK.

10. Dispositif pour mesurer le niveau d'un signal radio par satellite codé numérique reçu, comportant un récepteur de signaux radio par satellite selon l'une des revendications 1-10 et un récepteur de mesure d'antenne standard (10) relié à la sortie du récepteur de signaux radio par satellite (1).
